# EUROPEAN PATENT APPLICATION

(11) **EP 2 306 334 A1**
(43) Date of publication of application: **06.04.2011**
(21) Application number: 09011947.0
(22) Date of filing: 18.09.2009
(51) Int. Cl.: G06F 17/30

(54) **Method for creating an analysis data-structure for a document**

(71) Applicant: Weil, Sven, 86940 Schwifting (DE)
(72) Inventor: Weil, Sven, 86940 Schwifting (DE)

(57) **Abstract**

The object of the present invention is a method of analysing a document (100), comprising the step of representing said document (100) with another analysis data-structure (400) for simplyfying the analysis of said document (100), in particular using at least one keyword list (301, 302, 303) , in particular using the intermediate step of representing said document (100) with a tree structure (200).

## Description

### Field of Invention

The invention relates to the analysis of a document, in particular but not restricted to a document in form of a tree structure, such as a document in a markup language (e.g. HTML, XML, SGML). The analysis of said document can be a structure and/or content analysis.

At present one would use either state of the art methods based on checksums bound to specific elements, e.g, HTML elements for HTML documents, or state of the art methods based on plain text strings for said analysis, or state of the art methods based on date and validity or length comparisons, more recently also extended to semantic analysis of said actual content.

Frequently such analysis is required to accomplish in a minimum amount of time, even for large documents. For such requirement checksum calculations of single elements prove too complicated and time consuming, as well as string operations or semantic analysis do. Time and validity comparisons do not allow any conclusion on actual content of said document and pure length comparisons have to be applied on said document split in multiple segments, to be able to obtain any sense of location related to occurence or matching of a property, so again compute intensive, and do not precisely indicate locations of said property.

One additional difficulty with present methods, is when applied to detect multiple properties in said document, they may need to be executed repeatedly for each such property, each time requiring conversion of large parts of the document or the entire document, or require holding a representation of the entire document in memory.

### Background Art

A first known method for analysing web pages for comparison purposes is disclosed by US Pat. No. US5,898,836. Said first known method uses checksums bound to HTML tags to store a current status of a document and, when the document is compared to a previous version of the same document, uses these checksums to determine if a change occured. Said first known method is suitable for simple change detection, but is relatively computing intensive due to the calculation of the checksums for every element of a web page bound by HTML tags and also will not allow to detect if an element was modified only or if something was inserted into or deleted from said element of a webpage.

A second known method for similar use, but with different embodiments, is disclosed by US Pat. No. US6,785,864. Said second known method uses a time-stamp to determine if a web page referenced with a URL has changed. Said second method is not suitable to determine a change in structure or content of said web page as only a time information is provided for comparison.

A third known method for detecting change in web pages is disclosed in US Pat. No. US5,978,842. Said third known method uses checksums to detect changes in pages. Said third method is again not suitable to qualify the origin of a change in structure or content of said web page at a detailled level and is compute intensive, as checksum calculations need to be applied.

### Summary of the Invention

The object of the present invention is to define a method for analysing a document, which enables to ease and speed the analysis and reduces the amount of memory and resources needed to accomplish such analysis.

The invention provides a method to create a specific analysis data structure (400) from said document (100), in a way that said analysis data structure (400) is suitable and optimizied for enabling a high performant analysis of said document (100).

Even though the analysis will be applied to said analysis data structure (400), the results will enable to draw conclusions on said document. This is particularly interesting to analyze if some documents match a certain criteria, e.g in a client-server or other distributed environment such as a network, the world wide web or the internet, as the original documents (100) do not need to be send to the machine performing the actual analysis. Instead, only their analysis data structures (400), which are much lighter in terms of memory or bandwidth requirements, need to be transmitted.

In general, it is frequently desireable to check or analyse specific properties of a document or a tree structure, more specifically content or structure related properties. To do so, queries, conditions and test-cases may be specified in form of parameters or expressions.

The invention uses at least one keyword list (301, 302, 303) to represent these parameters or expressions, that have to be searched within said document (100) or tree structure (200). Said keyword list may also contain lexical, syntactical, logical or regular expressions or processing instructions to be evaluated on the contents of said document (100) or tree structure (200).

### Invention

The present invention lays out a method for analysis of a document (100), providing the means to separate the information content and structure from a document (100), either directly or with an intermediate representation in a tree structure (200), and stores them in an analysis data-structure (400), representing said information content and structure with keycodes from a keyword map (300), and so enables a fast and easy further processing.

The method of the present invention builds an analysis data-structure (400), that is created based on a document (100) and pertains it's essential structural and content characteristics in form of codes, providing the possibility of analysing said analysis data structure (400), wherein the conclusions of said analysis are also valid for the said document (100). The analysis of such analysis data-structure (400) instead of analysis of the document (100) it is based on provides the following advantages:
- the memory consumption of the analysis data-structure (400) may be far smaller than the memory consumption of the document (100),
- the language elements or the textual content, the objects or the object type are replaced by keycodes from a keyword map (300), enabling a much simpler and faster analysis of the said language elements or textual content,
- by the means of a special encoding, the occurence of keywords or the compliance with at least one lexical, syntactical, logical or regular expression or processing instruction is checked already during the creation of the analysis model and encoded into said analysis model, and so avoiding complex and time-consuming post-processing operations.

Based upon the view of a tree structure (200), one can derive that every node (201, 202, 203, 204, 205) of said tree structure (200) owns two major properties : an index for the count of vertical positions it is separated from the root node (201) of the tree structure (200), increasing in vertical direction from the root node (201) of said tree structure (200), and an index for the count of horizontal positions it is separated from the root node (201) of the tree structure (200), increasing in horizontal direction from the root node (201) of said tree structure (200).

With said two properties, the position of said node (201, 202, 203, 204, 205) in said tree structure (200) is defined, and can be represented by a value pair (horizontal index, vertical index). The structure of said tree structure (200) can then be represented by a list of said value-pairs. Each of said value-pairs corresponds to one data of the analysis data structure (400). Storing the vertical index in the analysis data structure (400) can be omitted, as said vertical index can be read from the analysis data structure (400) by counting the number of datasets (401, 402, 403) in said analysis data structure (400).

By indication of the horizontal index in said analysis data structure (400), it is guaranteed that parent-child-relations can be detected and reproduced.

As already said above, the properties to test on a document (100) are specified by parameters or expressions, composed by at least one element of the language or a combination of at least two elements of the language space, for instance in form of lexical, syntactical, logical or regular expressions or processing instructions. Said properties to test on a document (100) constitute a keyword from a keyword list (301, 302, 303).

To achieve efficient processing and storage of the elements of a language or of variable expressions, a keyword map (300) is created on the basis of said keyword list (301, 302, 303), wherein each element of said keyword map (300) contains one keyword associated with one keycode in form of one uniquely assigned value.

By this encoding, the analysis data-structure (400) enables very fast diagnosis of the occurence of keywords within a document (100) and so speeds up and eases the programming and execution of analysis or other post-processing operations.

Indeed, this encoding enables a storage of the analysis data-structure (400) in a very compact and efficient way, consuming only a portion of the storage needed for the source document (100). As the invention enables to reduce the amount of storage required it can also be used to reduce the amount of data transmitted in a local network communication or internet communication. In the cases one of the fields of said dataset (401, 402, 403) contains content, or an encoded or compressed version thereof, from said document (100), using the anaylsis data-structure (400), the same method could be used to load and reproduce at least parts of the document (100).

### Description of Figures

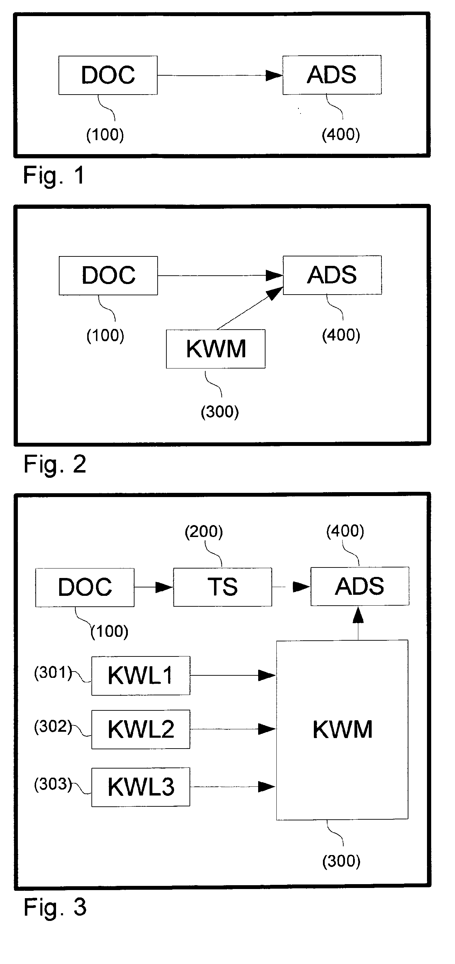

**Fig. 1** is a diagram of a document (100) transformed into a analysis data-structure (400).
**Fig. 2** is a diagram of a document (100) transformed into a analysis data-structure (400), wherein a keyword map (300) is used to provide keycodes.
**Fig. 3** is a diagram of a document (100) transformed into a analysis data-structure (400), wherein an intermediate tree structure (200) is used and a keyword map (300), based on several keyword lists (301, 302, 303) is used to provide keycodes.

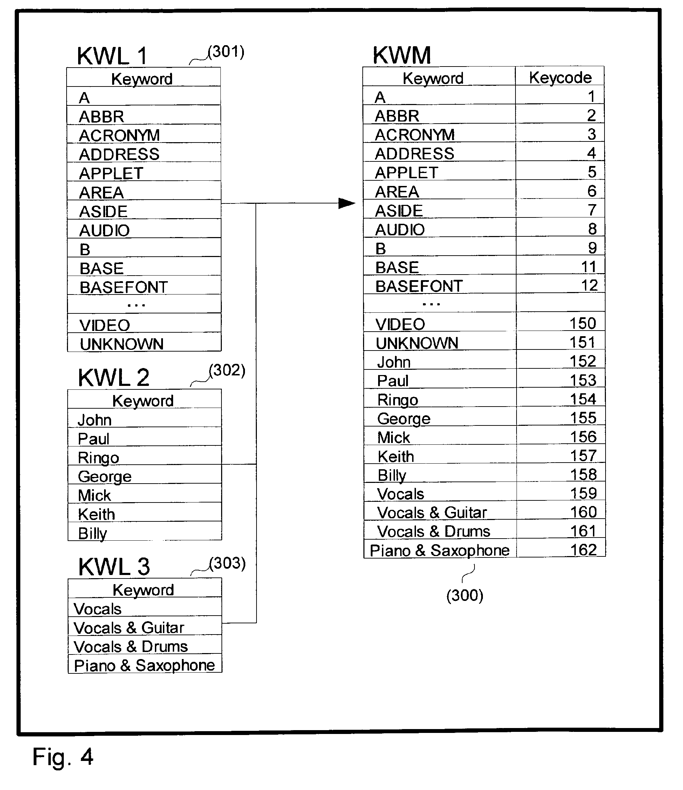

**Fig. 4** is a diagram representation of the creation of one keyword map based on several keyword lists (301, 302, 303).

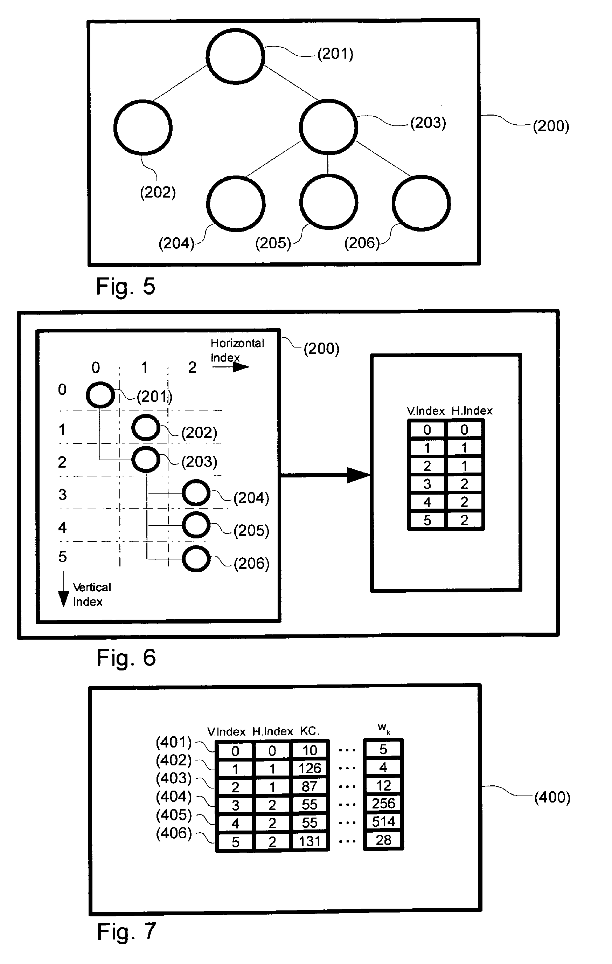

**Fig. 5** is a diagram representation of a tree structure (200).
**Fig. 6** is a diagram of the transformation of a tree structure (200) into a list of value-pairs.
**Fig. 7** is a diagram of an analysis data-structure (400) containing fields for horizontal index, vertical index, keycode and an additional content.

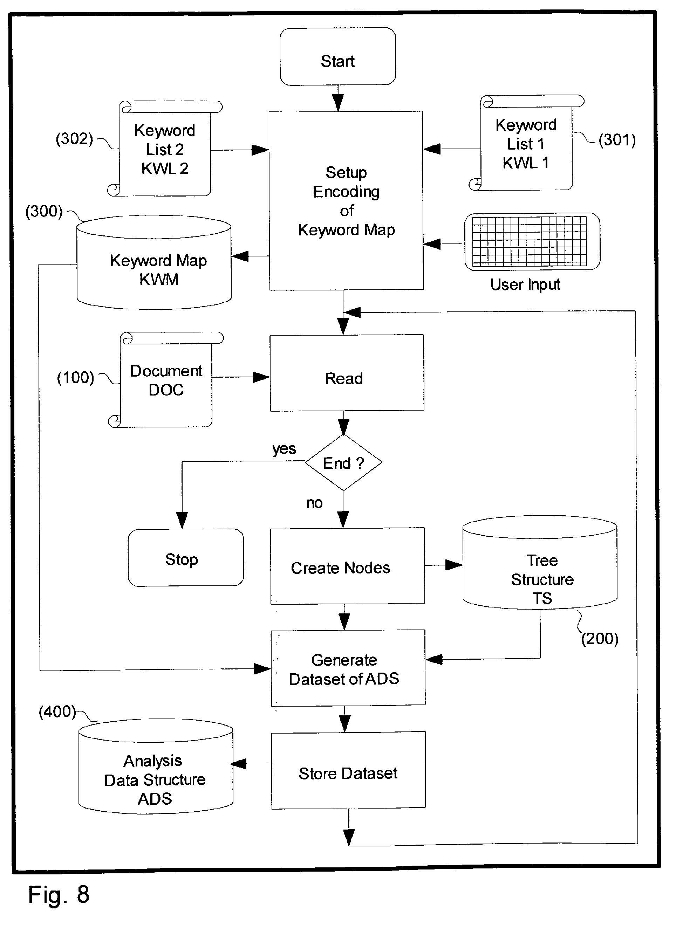

**Fig. 8** is a diagram representation of the steps involved in the claimed method.

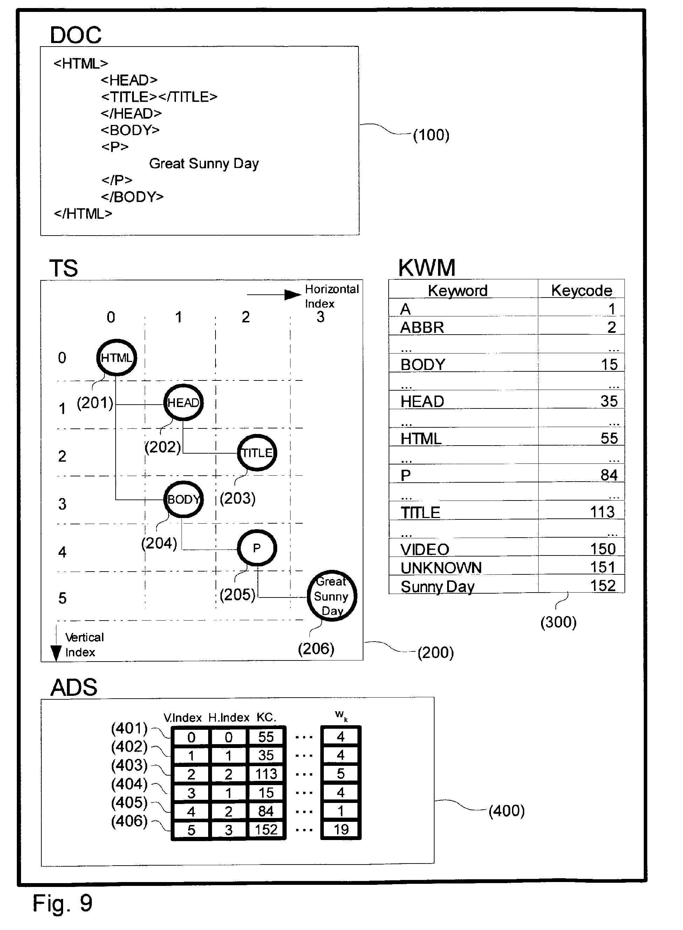

**Fig. 9** is a diagram representation of one first example of use of the claimed method.

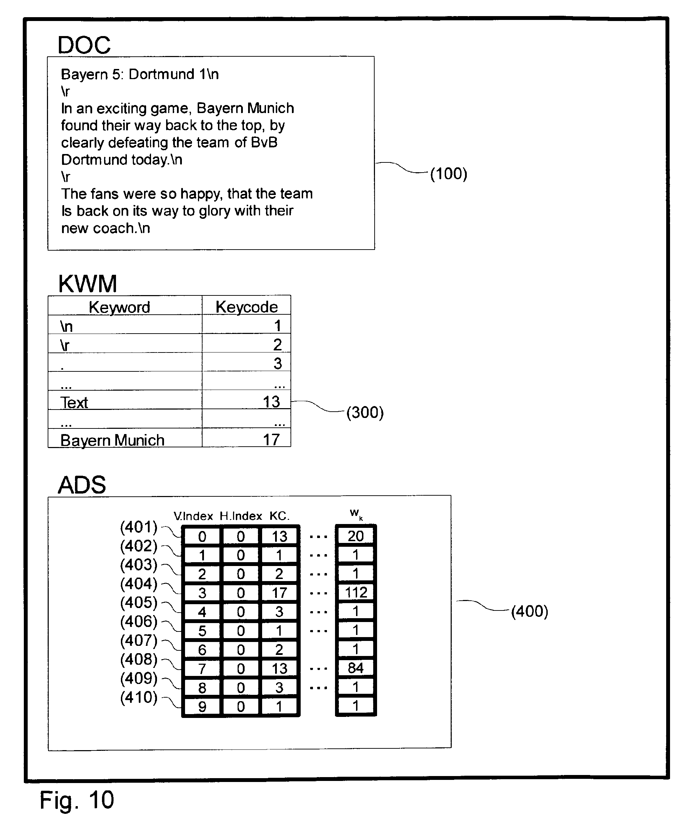

**Fig. 10** is a diagram representation of one second example of use of the claimed method.

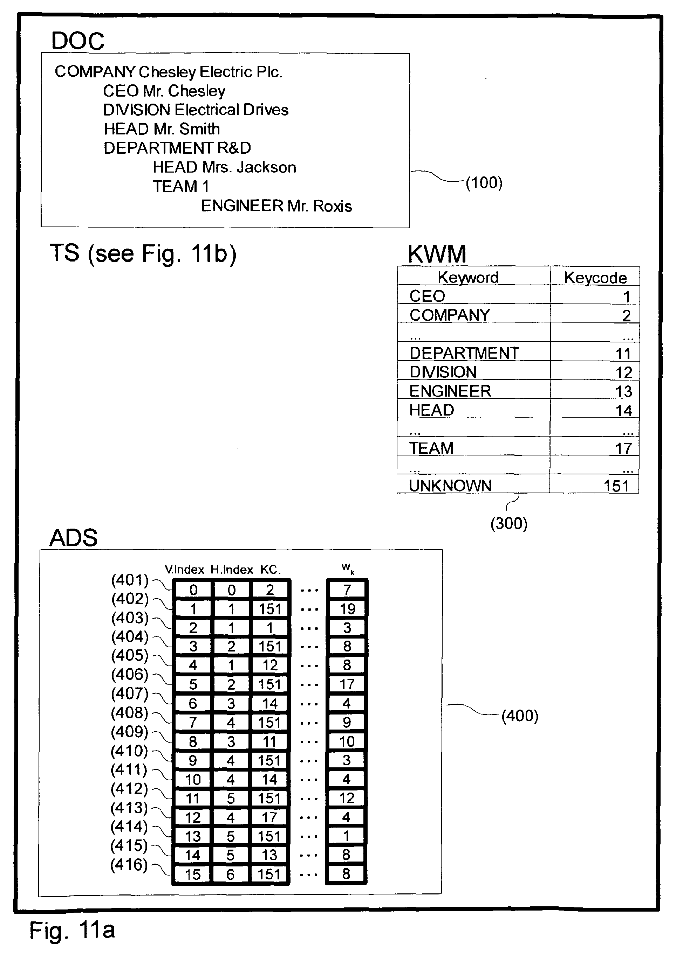

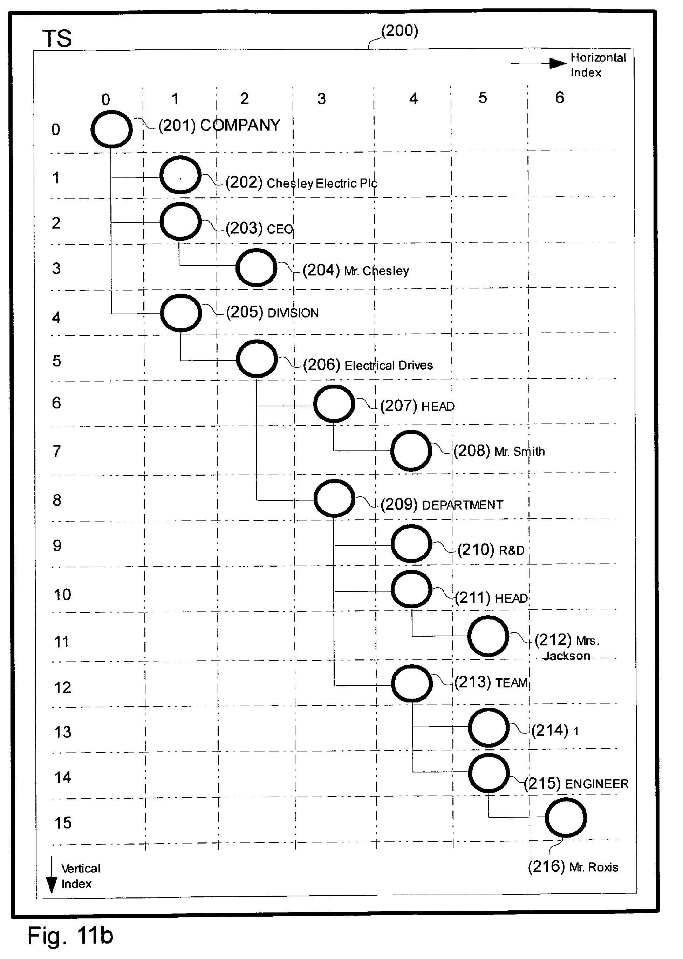

**Fig. 11** is a diagram representation of one third example of use of the claimed method.

### Detailed Description

According to the present invention, a method of analysing a document (100), comprising the step of representing said document (100) with another analysis data-structure (400) for simplyfying the analysis of said document (100) is disclosed.

According to an optional embodiment of the invention, at least one keyword list (300, 301, 302) is used in said step of representing said document (100) with another analysis data-structure (400).

Said analysis data-structure (400) is used for the preservation of structural information as well as specific indications of content properties. Said analysis data-structure (400) can be defined to represent an entire document (100) or only parts of said document (100).

In the analysis data-structure (400), both structural information and content information will be represented with keycodes which enables a very simplified, very fast and very easy further analysis and further processing, as from the encoding onwards only numerical operations will have to be applied to detect the properties of any element of the document (100).

According to an optional embodiment of the invention, at least one part of said keyword list (300, 301, 302) is defined during the execution of the method, either by user interaction by means of an input device, or by means of an input file, or by a parameter generated during the execution of the method.

This enables a high degree of flexibility for analysis of said document (100), as the keywords can be adapted dynamically to the context of the document (100).

According to an optional embodiment of the invention, at least one part of said keyword list (301, 302, 303) contains as a keyword one lexical, syntactical, logical or regular expression or processing instruction involving several parameters.

This enables for example, to assign one unique keyword for two different words read in the text, using a logical operator "OR".

According to an optional embodiment of the invention, at least one keyword map (300) is created on the basis of said at least one keyword list (301, 302, 303), wherein each element of said keyword map (300) contains one keyword associated with one keycode in form of one uniquely assigned value.

According to an optional embodiment of the invention, the method comprises the intermediate step of representing said document (100) with a tree structure (200), wherein said keyword list (300, 301, 302) is used for creating said analysis data-structure (400) from said tree structure (200).

Generally, such a tree structure (200) contains a root node (201), the origin of the tree, from where branches may depart, each of said branches being terminated by a child node (202, 203, 204, 205) at its end. From said child nodes more branches may depart, each of said branches being terminated by a child node at its end. This can be repeated over several hierarchical levels, until child nodes are reached that do not have branches: these are called leaves or terminal nodes. A concrete example of such a tree structure (200) is the "Document Object Model" (DOM), published and standardized by the worldwide web consortium (w3c).

In the case of this invention, the use of a tree structure (200) eases the encoding of said document (100) into said analysis data-structure (400). For documents (100) in a language that may be a markup-language, the tree structure (200) is defined by the language elements. For documents (100) in spoken languages, that may contain punctuation and structured text, marked with structural elements, the tree structure (200) may be based on such punctuation and structural elements, for instance points to separate sentences in different nodes (201, 202, 203), spaces to separate words into different nodes (201, 202, 203), a paragraph and a line break to separate entities of text elements.

According to an optional embodiment of the invention, each node (201, 202, 203) of said tree structure (200) is represented by at least one dataset (401, 402, 403) of said analysis data-structure (400).

According to an optional embodiment of the invention, each dataset (401, 402, 403) of said analysis data-structure (400) contains at least one information concerning the horizontal index of the corresponding node (201, 202, 203) from said tree structure (200). It may also contain one information concerning the vertical index of the corresponding said node (201, 202, 203) from said tree structure (200).

The horizontal index is a numerical value that represents the index count at which said node is situated in said tree structure (200), relative to said root node (201) of said tree structure (200). This value will start at said root node (201) with "0" or any other preferred numerical value. However it is important that said root node (201) is assigned the smallest numerical value for its horizontal index in said document (100) and that all other said nodes (202, 203) are assigned values, that will continuously increase, based on their location in said document (100) or said tree structure (200). Several other said nodes (202, 203) may have the same horizontal index, for instance in cases where the number of branches and said nodes (202, 203) between said several nodes (202, 203) and said root node (201) is the same.

The vertical index is a clear, uniquely assigned, continuous, increasing numerical value, that will start at said root node (201) with "0" or any other preferred numerical value. However, it is important that said root node (201) is assigned the smallest numerical value of the elements in said document (100) or said tree structure (200) and that all other said nodes (202, 203) are assigned continuous values, based on their location in said document (100) or said tree strutcure (200).

With the vertical index and the horizontal index, every said node (201, 202, 203) can be positioned in the view of said tree structure (200).

Hierarchical relations can be reconstructed based on the horizontal and vertical index information of said nodes (201, 202, 203). For instance, but not limited to :
- If said node (201, 202, 203) with a higher vertical index is located on a higher level as a said second node (201, 202, 203), and no further said nodes (201, 202, 203) are separating these two said nodes (201, 202, 203), said second node (201, 202, 203) is a parent node of said first node, and the first node (201, 202, 203) is a child node of said second node (201, 202, 203).
- If said node (201, 202, 203) with a higher vertical index is located on the same level as said second node (201, 202, 203), and no further said nodes (201, 202, 203) are separating these two said nodes (201, 202, 203), said nodes (201, 202, 203) are siblings and said second node (201, 202, 203) is the left sibling of said first node (201, 202, 203), and the said first node (201, 202, 203) is the right sibling of said second node (201, 202, 203).
- If said node (201, 202, 203) with a higher vertical index is located on a smaller level as said second node (201, 202, 203), and no further said nodes (201, 202, 203) are separating these two said nodes (201, 202, 203), said second node (201, 202, 203) is a leaf or a terminal node of it's branch and said first node (201, 202, 203) is a new branch of it's parent node.

According to an optional embodiment of the invention, each dataset (401, 402, 403) of said analysis data-structure (400) contains at least one information representing the content of the corresponding node (201, 202, 203) from said tree structure (200), wherein said information may be based at least partly on said content and/or on a keyword from a keyword map (300).

The keycode and optionally additional values describe the content or the type of the node (201, 202, 203) and determine which element of a document (100) is represented by the node (201, 202, 203).

To describe structures and content, in most cases, a language will be used. A document (100) for example, is commonly written in a language. A language is defined by a finite quantity of language elements.

A language may be a natural, spoken language or an abstract language, for instance a programming language or a markup language.

For a spoken language, the language elements will be the words of said language, for a programming language the language elements are the commands and/or the keywords of said programming language.

The range of numerical values of the keycodes, also called number space, is chosen in a way that it at least contains enough values to properly assign exactly one value to each element of the language.

In cases where due to bit-resolution the resulting number space is not completely used, the code should be chosen to ideally be contained in the lower area of the number space.

For fine-tuning analysis and optimizing performance, the encoding can use logical groups, that may hold several elements of a language or variable expression with for example similar properties. Said logical groups will be assigned to specific, ideally continuous areas of the number space enabling fast detection of group relations. In the case of a markup language, for instance, one could define logical groups as "Simple Elements", "Specific Elements", "Keywords", "Logical Expressions", "Regular Expressions", "Id's", "Classes".

According to an optional embodiment of the invention, each dataset (401, 402, 403) of said analysis data-structure (400) contains at least one information representing properties of properties may be for instance a length of a text, a checksum, a hypertext link or any other content.

A node (201, 202, 203), that represents a complex structure of information in the original tree structure (200) can be represented by at least one dataset (401, 402, 403) with the values defined above. A complete tree structure (200), or part of it, can then be represented by an analysis data-structure (400) comprising a list of such datasets (401, 402, 403).

This means, that the original source, for instance a document (100) in a markup language, most commonly given as plain text document, defining a tree structure (200) with elements with start- and end-tags to be transformed in nodes (201, 202, 203) of the tree, can be replaced for analysis purposes with said analysis data-structure (400).

### Examples

One first example of use of the claimed method would be to analyse a document written in HTML markup language. HTML uses a hierarchical tree structure to represent the content, the structure and stylistic elements of a document. The keyword map will assign a keycode to each HTML language element, more specifically each HTML tag. But if, for instance, one would like to detect if a keyword as "sunny day" appears on a HTML page, then one would need to define a keyword "sunny day" and include it in the input parameters at execution time.

One second example of use of the claimed method would be to analyse a newspaper. If the keyword map assigns newspaper specific stylistic elements as paragraphs, titles, various font-sizes to specific keycodes, the newspaper structure and content can as well be encoded in such an analysis data-structure. It would also be possible here to use some words of the text as keywords. For instance, one would like to detect if a keyword as "Bayern Munich" appears in a newspaper, then one would need to define a keyword "Bayern Munich" and include it in the input parameters at execution time.

One third example of use of the claimed method would be to analyse an enterprise organisation hierarchy. If the static encoding assigns organisational functions to keycodes, the hierarchy can be encoded in a analysis data-structure.

One fourth example of use of the claimed method would be an audio recording of spoken language. If the language is defined with keywords, each word being assigned a keycode, the audio record can be encoded as well in an analysis data-structure.

### Conclusion

The resulting analysis data-structure (400) is very suitable for fast processing: as the structure and the content or the type of a node (201, 202, 203) is encoded as keycode, an identity check for comparing two nodes (201, 202, 203) is reduced to a simple arithmetic operation. As the analysis data-structure (400) can be contained in a linear list of arrays, the search for occurence of a keyword or of applicability of a parameter or expression represented by keycodes in said datasets (401, 402, 402) of said analysis data-structure (400) is reduced to one loop run through the list and a simple arithmetic operation on each array.

In the original document or tree, similar analysis would be much more complicated: a tree may have to be traversed in all its nodes and for each node a position related character comparison with a reference text would be needed.

## Claims

1. Method of analysing a document (100), comprising the step of representing said document (100) with another analysis data-structure (400) for simplyfying the analysis of said document (100).

2. The method of claim 1, wherein at least one keyword list (301, 302, 303) is used in said step of representing said document (100) with another analysis data-structure (400).

3. The method of claim 2, wherein at least one part of said keyword list (301, 302, 303) is defined during the execution of the method, either by user interaction by means of an input device, or by means of an input file, or by a parameter generated during the execution of the method.

4. The method of claim 2, wherein at least one part of said keyword list (301, 302, 303) contains as a keyword one lexical, syntactical, logical or regular expression or processing instruction involving several parameters.

5. The method of one of claims 2 to 4, wherein at least one keyword map (300) is created on the basis of said at least one keyword list (301, 302, 303), wherein each element of said keyword map (300) contains one keyword associated with one keycode in form of one uniquely assigned value.

6. The method claim 5, comprising the intermediate step of representing said document (100) with a tree structure (200), wherein said keyword map (300) is used for creating said analysis data-structure (400) from said tree structure (200).

7. The method of claim 6, wherein each node (201, 202, 203) of said tree structure (200) is represented by at least one dataset (401, 402, 403) of said analysis data-structure (400).

8. The method of claim 7, wherein each dataset (401, 402, 403) of said analysis data-structure (400) contains at least one information concerning the horizontal index of the corresponding node (201, 202, 203) from said tree structure (200).

9. The method of claim 8, wherein each dataset (401, 402, 403) of said analysis data-structure (400) contains at least one information representing the content of the corresponding node (201, 202, 203) from said tree structure (200), wherein said information may be based at least partly on said content and/or on a keyword from a keyword map (300).

10. The method of claim 9, wherein each dataset (401, 402, 403) of said analysis data-structure (400) contains at least one information representing properties of the corresponding node (201, 202, 203) from said tree structure (200), wherein said properties may be for instance a length of a text, a checksum, a hypertext link or any other content.
